(19) Europäisches Patentamt
European Patent Office
Office européen des brevets

(11) **EP 4 670 892 A1**

(12) **EUROPEAN PATENT APPLICATION**

(43) Date of publication:
**31.12.2025   Bulletin 2026/01**

(21) Application number: **25180422.5**

(22) Date of filing: **03.06.2025**

(51) International Patent Classification (IPC):
**B23K 9/095** (2006.01)    **B23K 9/12** (2006.01)
**B23K 9/18** (2006.01)    **B23K 9/073** (2006.01)

(52) Cooperative Patent Classification (CPC):
**B23K 9/186; B23K 9/073; B23K 9/095; B23K 9/125**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.06.2024   JP 2024101026**

(71) Applicant: **DAIHEN Corporation
Yodogawa-ku
Osaka-shi
Osaka 532-8512 (JP)**

(72) Inventors:
• **BABA, Hayato
Osaka-shi, 532-8512 (JP)**
• **HONDA, Reo
Osaka-shi, 532-8512 (JP)**
• **NISHISAKA, Futoshi
Osaka-shi, 532-8512 (JP)**

(74) Representative: **Boult Wade Tennant LLP
Salisbury Square House
8 Salisbury Square
London EC4Y 8AP (GB)**

(54) **SUBMERGED ARC WELDING CONTROL METHOD AND SUBMERGED ARC WELDING SYSTEM**

(57)    A submerged arc welding control method is provided for performing welding by feeding a welding wire and outputting a welding current and a welding voltage in accordance with set external characteristics. The method includes: setting a current set value and a voltage set value; setting the external characteristics so as to pass through an intersection point of the current set value and the voltage set value and have a negative slope at the intersection point; performing variable speed control of feed speed of the welding wire such that the welding voltage is equal to the voltage set value; and causing an operating point of the welding current and the welding voltage to converge at the intersection point of the external characteristics.

FIG.1

**Description**

FIELD

The present disclosure relates to a submerged arc welding control method and a submerged arc welding system.

BACKGROUND

Submerged arc welding is conventionally known. In submerged arc welding, after granular flux is applied over a base metal, a welding wire is fed into the flux to generate an arc between the tip of the welding wire and the base metal for welding. In submerged arc welding, it is possible to weld thick plates with high efficiency by passing a large current through a welding wire having a large diameter.

A submerged arc welding method has been used in which the arc length is controlled by variable speed control of the feed speed of the welding wire based on the welding voltage (see e.g., JP-A-H09(1997)-271944).

In variable speed control, the welding voltage, which correlates with the arc length, is maintained at an appropriate value by feedback control of the feed speed based on the error between the detected welding voltage and the voltage set value. In submerged arc welding using a wire having a large diameter, change in wire melting speed with change in welding current is small, so that it is difficult to provide the arc-length self-control effect, which is generally utilized in consumable electrode arc welding using a welding power supply having constant voltage characteristics. In submerged arc welding, therefore, the arc length is maintained at an appropriate value by variable speed control using a welding power supply having constant current characteristics.

In variable speed control, when the detected welding voltage is greater than the voltage set value, the arc length is longer than the desired value. In such a case, the feed speed is increased to reduce the arc length to make it approach the desired value. Conversely, when the detected welding voltage is smaller than the voltage set value, the arc length is shorter than the desired value. In such a case, the feed speed is decreased to increase the arc length to make it approach the desired value.

PROBLEMS TO BE SOLVED

In variable speed control, when the detected welding voltage is significantly greater than the voltage set value, the arc length is significantly longer than the desired value. In such a case, it may be desired to sharply increase the feed speed to quickly reduce the arc length to make it approach the desired value. Conversely, when the detected welding voltage is significantly smaller than the voltage set value, the arc length is significantly shorter than the desired value. In such a case, it may be desired to sharply decrease the feed speed to quickly increase the arc length to make it approach the desired value. In variable speed control, however, if a large gain is set to sharply increase or decrease the feed speed, the feed speed fluctuates too sensitively, which may cause an unstable welding state. For this reason, the conventional variable speed control could not set a very large gain, resulting in convergence with the error remaining between the detected welding voltage and the voltage set value.

In submerged arc welding, the welding conditions are set and controlled mainly by the welding operator setting a current set value and a voltage set value. Thus, for proper setting and control of the welding conditions, it is important that the welding current equal to the current set value and the welding voltage equal to the voltage set value are outputted. In the conventional variable speed control, the welding current is subjected to constant current control, and hence, always equal to the current set value. On the other hand, as described above, the welding voltage will have an error from the voltage set value, which may cause issues in the setting and control of the welding conditions.

SUMMARY

It is therefore an object of the the present disclosure to provide a submerged arc welding control method and a submerged arc welding system that are capable of outputting the welding current and the welding voltage that match the current set value and the voltage set value and allow proper setting and control of the welding conditions.

A submerged arc welding control method is provided according to a first aspect of the present disclosure for performing welding by feeding a welding wire and outputting a welding current and a welding voltage in accordance with set external characteristics. The method may comprise: setting a current set value and a voltage set value; setting the external characteristics so as to pass through an intersection point of the current set value and the voltage set value and have a negative slope at the intersection point; performing variable speed control of feed speed of the welding wire such that the welding voltage is equal to the voltage set value; and causing an operating point of the welding current and the welding voltage to converge at the intersection point of the external characteristics.

As an embodiment, the negative slope may be set to be equal to or less than -5V/100A and equal to or greater than -25V/100A.

As an embodiment, the outputting may comprise AC, and the welding current and the welding voltage may be effective values or average values.

As an embodiment, the gain for the variable speed control may be set such that an absolute value of an error between the voltage set value and a convergence value of the welding voltage is equal to or greater than 0.1 V and equal to or less than 1V.

As an embodiment, the gain for the variable speed control may be set such that an absolute value of an error between the voltage set value and a convergence value of the effective value or the average value of the welding voltage is equal to or greater than 0.1 V and equal to or less than 1 V.

A submerged arc welding system is provided according to a second aspect of the present disclosure for performing welding by feeding a welding wire and outputting a welding current and a welding voltage in accordance with set external characteristics. The submerged arc welding system may be configured to: set a current set value and a voltage set value; set the external characteristics so as to pass through an intersection point of the current set value and the voltage set value and have a negative slope at the intersection point; perform variable speed control of feed speed of the welding wire such that the welding voltage is equal to the voltage set value; and cause an operating point of the welding current and the welding voltage to converge at the intersection point of the external characteristics.

With the configuration described above, for a submerged arc welding control method and a submerged arc welding system, it is possible to output the welding current and the welding voltage that match the current set value and the voltage set value and perform proper setting and control of the welding conditions.

DRAWINGS

Fig. 1 is a block diagram of a welding system for performing a submerged arc welding control method according to an embodiment of the present disclosure.

Fig. 2 is a timing chart of signals in the welding system of Fig. 1 in a DC output mode.

Fig. 3 is a timing chart of signals in the welding system of Fig. 1 when the welding current of a sine wave is applied in an AC output mode.

Fig. 4 shows the relationship between the external characteristics and the operating point of the welding current and welding voltage to describe the submerged arc welding control method according to an embodiment of the the present disclosure.

EMBODIMENTS

The following describes preferred embodiments of the present disclosure in detail with reference to the drawings. In the present disclosure, the "average value" means the average of absolute values.

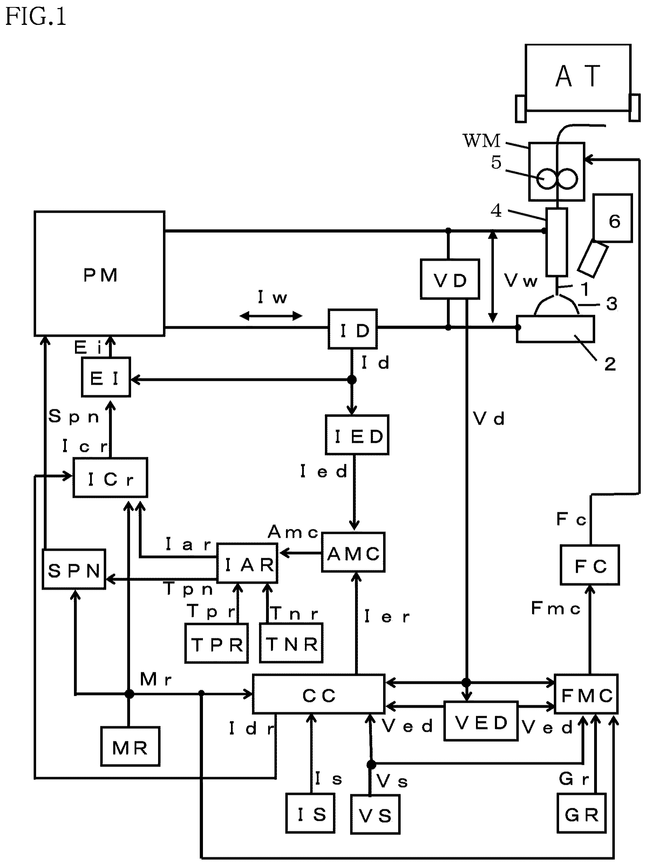

Fig. 1 is a block diagram of a welding system for performing a submerged arc welding control method according to an embodiment of the present disclosure. With reference to the figure, each block will be described below.

The power supply main circuit PM is connected to a commercial power supply (not shown), such as a 200 V three-phase power supply. The power supply main circuit PM receives as input a current error amplification signal Ei and a polarity-switching signal Spn, both described later, performs inverter control in accordance with the current error amplification signal Ei, and performs switching between the electrode positive polarity EP and the electrode negative polarity EN in accordance with the polarity-switching signal Spn to output AC or DC welding current Iw and welding voltage Vw. Though not illustrated, the power supply main circuit PM includes a primary rectifier that rectifies the commercial power supply, a smoothing capacitor that smooths the rectified DC, a primary inverter circuit that converts the smoothed DC into high-frequency AC, a high-frequency transformer that steps down the high-frequency AC to a voltage value appropriate for welding, a secondary rectifier that rectifies the stepped-down high-frequency AC to DC, a reactor that smooths the rectified DC, a secondary inverter circuit that switches the smoothed DC between the electrode positive polarity EP and the electrode negative polarity EN in accordance with the polarity-switching signal Spn, a modulation circuit that receives as input the current error amplification signal Ei to output a pulse width modulation signal, and a drive circuit that receives as input the pulse width modulation signal to drive the switching elements of the primary inverter circuit.

The welding wire 1 is fed through the welding torch 4 by the rotation of the feeding roller 5 coupled to the feeder WM to cause generation of an arc 3 between the welding wire 1 and the base metal 2. The welding voltage Vw is applied between the power supply tip (not shown) of the welding torch 4 and the base metal 2 to cause the application of the welding current Iw. The flux feeder 6 feeds the flux (not shown) to an arc generation area. The arc generation area is covered with the flux, so that the arc 3 cannot be seen from the outside.

The automatic carriage AT carries the welding torch 4 and the flux feeder 6. During welding, the automatic carriage AT moves at a predetermined travel speed such that the tip position of the welding torch 4 follows the welding line while applying flux from the flux feeder 6.

The output mode setting circuit MR outputs an output mode setting signal Mr that is at High level in an AC output mode and at Low level in a DC output mode.

The current setting circuit IS outputs a predetermined current setting signal Is. The voltage setting circuit VS outputs a predetermined voltage setting signal Vs.

The voltage detection circuit VD detects the instantaneous value of the welding voltage Vw and converts the instantaneous value into an absolute value to output a voltage detection signal Vd.

The voltage effective/average value detection circuit VED receives as input the voltage detection signal Vd and calculates the effective value or the average value from the inputted value to output the voltage effective/average value detection signal Ved.

The external characteristics control circuit CC receives as input the current setting signal Is, the voltage setting signal Vs, the output mode setting signal Mr, the voltage effective/average value detection signal Ved, and the voltage detection signal Vd, and outputs the current effective/average value setting signal Ier and the DC current setting signal Idr calculated based on the following equation (1) or (2).

1) The case where the output mode setting signal Mr is at High level (AC output mode):

The external characteristics are the output characteristics of the welding power supply and can be expressed as a function Ve = f (Ie), where Ie is the effective or average value of of the welding current Iw as input, and Ve is the effective or average value of the welding voltage Vw as output. The function can be defined as a straight line having a slope K and passing through the intersection point of the current setting signal Is and the voltage setting signal Vs, which is expressed by the following equation.

$$Ve = K \cdot (Ie - Is) + Vs$$

where the slope K is a negative slope in the range of -5 to -25 (V/100A). Rearranging the above equation in terms of Ie and replacing Ie and Ve with the current effective/average value setting signal Ier and the voltage effective/average value detection signal Ved, respectively, give the following equation.

$$Ier = (Ved - Vs) / K + Is \qquad (1)$$

In the AC output mode, the above equation (1) is used to perform output control for the external characteristics.

2) The case where the output mode setting signal Mr is at Low level (DC output mode):

Replacing Ier and Ved in the above equation (1) with Idr and Vd, respectively, gives the following equation.

$$Idr = (Vd - Vs) / K + Is \qquad (2)$$

In the DC output mode, the above equation (2) is used to perform output control for the external characteristics.

The current detection circuit ID detects the instantaneous value of the welding current Iw and converts the instantaneous value into an absolute value to output a current detection signal Id.

The current effective/average value detection circuit IED receives as input the current detection signal Id and calculates the effective value or the average value from the inputted value to output the current effective/average value detection signal Ied.

The current amplitude modulation circuit AMC receives as input the current effective/average value detection signal Ied and the current effective/average value setting signal Ier and performs modulation control based on the error amplification value of the two values to output the current amplitude modulation signal Amc. The current amplitude modulation circuit AMC thus changes the amplitude of the welding current such that the effective value or average value of the welding current Iw is equal to the value of the current effective/average value setting signal Ier.

The electrode positive polarity period setting circuit TPR outputs a predetermined electrode positive polarity period setting signal Tpr. The electrode negative polarity period setting circuit TNR outputs a predetermined electrode negative polarity period setting signal Tnr.

The AC current setting circuit IAR receives as input the electrode positive polarity period setting signal Tpr, the electrode negative polarity period setting signal Tnr, and the current amplitude modulation signal Amc, and performs the following operations 1) to 3) to output an AC current setting signal Iar with a half-cycle waveform of a sine wave or a square wave (including a trapezoidal wave), and a polarity signal Tpn.

1) During the electrode positive polarity period Tep set by the electrode positive polarity period setting signal Tpr, the AC current setting circuit IAR outputs, as the AC current setting signal Iar, a half-cycle waveform of a sine wave or a square wave (including a trapezoidal wave) that is at a predetermined polarity-switching current value at the start point and the end point of the period and that has an amplitude set by the current amplitude modulation signal Amc. During the electrode positive polarity period Tep, the AC current setting circuit IAR outputs the polarity signal Tpn that is at High level.

2) During the subsequent electrode negative polarity period Ten set by the electrode negative polarity period setting signal Tnr, the AC current setting circuit IAR outputs, as the AC current setting signal Iar, a half-cycle waveform of a sine wave or a square wave (including a trapezoidal wave) that is at the above-described polarity-switching current value at the start point and the end point of the period and that has an amplitude set by the current amplitude modulation signal Amc. During the electrode negative polarity period Ten, the AC current setting circuit IAR outputs the polarity signal Tpn that is at Low level.

3) The above operations 1 and 2 are repeated.

The polarity-switching setting circuit SPN receives as input the output mode setting signal Mr and the polarity signal Tpn and performs the following operations 1) to 3) to output the polarity-switching signal Spn.

1) When the output mode setting signal Mr is at High level (the AC output mode) and the polarity signal Tpn is at High level (the electrode positive polarity EP), the polarity-switching setting circuit SPN outputs the polarity-switching signal Spn that is at High level.

2) When the output mode setting signal Mr is at High level (the AC output mode) and the polarity signal Tpn is at Low level (the electrode negative polarity EN), the polarity-switching setting circuit SPN outputs the polarity-switching signal Spn that is at Low level.

3) When the output mode setting signal Mr is at Low level (the DC output mode), the polarity-switching setting circuit SPN outputs the polarity-switching signal Spn that is at High level during welding with the electrode positive polarity EP and at Low level during welding with the electrode negative polarity EN.

The current control setting circuit ICR receives as input the output mode setting signal Mr, the AC current setting signal Iar, and the DC current setting signal Idr and performs the following operations 1 and 2 to output the current control setting signal Icr.

1) When the output mode setting signal Mr is at High level (the AC output mode), the current control setting circuit ICR outputs the AC current setting signal Iar as the current control setting signal Icr.

2) When the output mode setting signal Mr is at Low level (the DC output mode), the current control setting circuit ICR outputs the DC current setting signal Idr as the current control setting signal Icr.

The current error amplification circuit EI receives as input the current control setting signal Icr and the current detection signal Id and amplifies the error between the two values to output the current error amplification signal Ei.

The gain setting circuit GR outputs a predetermined gain setting signal Gr.

The variable speed control circuit FMC receives as input the output mode setting signal Mr, the voltage effective/average value detection signal Ved, the voltage detection signal Vd, the voltage setting signal Vs, and the gain setting signal Gr and performs the following operations 1 and 2 to output the feed speed modulation signal Fmc. The variable speed control circuit FMC performs variable speed control of the feed speed Fw to maintain the arc length at an appropriate value.

1) When the output mode setting signal Mr is at High level (the AC output mode), the variable speed control circuit FMC amplifies the error between the voltage effective/average value detection signal Ved and the voltage setting signal Vs in accordance with the value of the gain setting signal Gr, and performs variable speed control by P (proportional) control, PI (proportional-integral) control or PID (proportional-integral-derivative) control to output the feed speed modulation signal Fmc.

2) When the output mode setting signal Mr is at Low level (the DC output mode), the variable speed control circuit FMC amplifies the error between the voltage detection signal Vd and the voltage setting signal Vs in accordance with the value of the gain setting signal Gr, and performs variable speed control by P (proportional) control, PI (proportional-integral) control or PID (proportional-integral-derivative) control to output the feed speed modulation signal Fmc.

The feed control circuit FC receives as input the feed speed modulation signal Fmc and outputs to the feeder WM a feed control signal Fc for controlling the feed speed Fw of the welding wire 1 to the speed determined by the feed speed modulation signal Fmc.

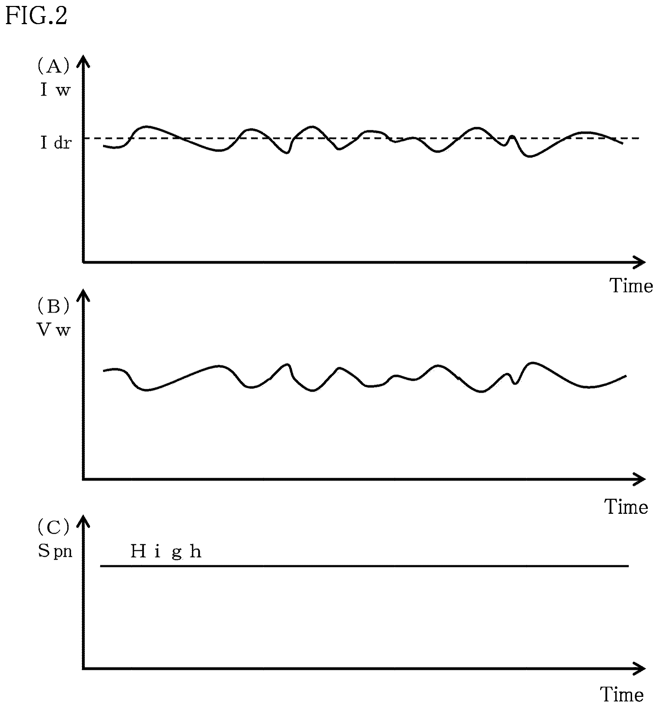

Fig. 2 is a timing chart of signals in the welding system of Fig. 1 in the DC output mode. In the figure, (A) shows the time variation of the welding current Iw, (B) shows the time variation of the welding voltage Vw, and (C) shows the time variation of the polarity-switching signal Spn. The operation of each signal will be described below with reference to the figure.

The figure shows the case where the output mode is the DC output mode and the output polarity is the electrode positive polarity EP. Therefore, as shown in (C) in the figure, the polarity-switching signal Spn is at High level for the entire period, indicating the electrode positive polarity EP.

Because submerged arc welding is basically performed under the welding conditions where a short circuit between the welding wire and the base metal does not occur, the entire period is the arc period. As shown in (A) in the figure, the welding current Iw is a DC waveform and controlled to the value of the DC current setting signal Idr of Fig. 1. The DC current setting signal Idr is calculated by substituting the value of the voltage detection signal Vd into the above formula (2). In this way, output control for the external characteristics is performed. As shown in (B) in the figure, the welding voltage Vw is a DC waveform and has a value corelated with the arc length. The feed speed Fw of the welding wire, not shown, is subjected to variable speed control such that the voltage detection signal Vd is equal to the voltage setting signal Vs of Fig. 1. In this way, the arc length is controlled.

When the output polarity is the electrode negative polarity EN, the polarity-switching signal Spn shown in (C) in the figure is at Low level for the entire period. The welding current Iw and the welding voltage Vw have waveforms of negative values.

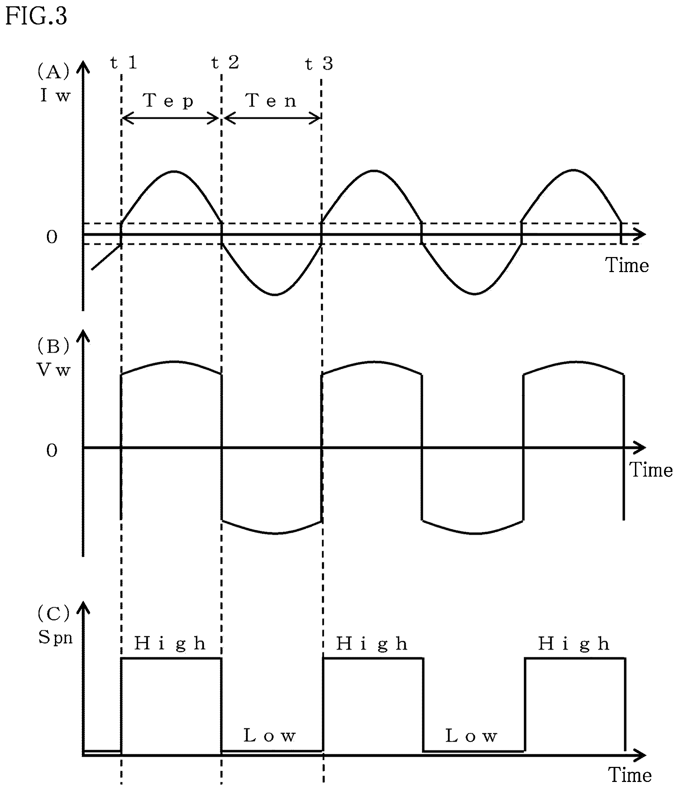

Fig. 3 is a timing chart of signals in the welding system of Fig. 1 when the welding current of a sine wave is applied in the AC output mode. In the figure, (A) shows the time variation of the welding current Iw, (B) shows the time variation of the welding voltage Vw, and (C) shows the time variation of the polarity-switching signal Spn. The operation of each signal will be described below with reference to the figure.

In the figure, the positive values above 0 A or 0 V are the values during the electrode positive polarity EP, and the negative values below 0 A or 0 V are the values during the electrode negative polarity EN.

During the period from time t1 to t2, the polarity-switching signal Spn is at High level as shown in (C) in the figure, resulting in the electrode positive polarity EP. As shown in (A) in the figure, during the electrode positive polarity period Tep from time t1 to t2, the welding current Iw has a positive half-cycle waveform of a sine wave that is at a positive polarity-switching current value at the start point t1 and the end point t2 of the period and that has an amplitude set by the current amplitude modulation signal Amc. During the period from time t2 to t3, the polarity-switching signal Spn is at Low level as shown in (C) in the figure, resulting in the electrode negative polarity EN. As shown in (A) in the figure, during the electrode negative polarity period Ten from time t2 to t3, the welding current Iw has a negative half-cycle waveform of a sine wave that is at a negative polarity-switching current value at the start point t2 and the end point t3 of the period and that has an amplitude set by the current amplitude modulation signal Amc. Thereafter, the time points t1 to t3 are repeated. The electrode positive polarity period Tep is set by the electrode positive polarity period setting signal Tpr of Fig. 1. The electrode negative polarity period Ten is set by the electrode negative polarity period setting signal Tnr of Fig. 1. The current effective/average value setting signal Ier of Fig. 1 is calculated by inputting the voltage effective/average value detection signal Ved in the above-described equation (1). The amplitude of the welding current is modulated and controlled such that the current effective/average value detection signal Ied of Fig. 1 is equal to the current effective/average value setting signal Ier. In this way, output control for the external characteristics is performed. In one example, the period Tep is 10 ms, the period Ten is 10 ms, the polarity-switching current value is ± 200 A, and the amplitude is ± 1000 A.

As shown in (B) in the figure, the welding voltage Vw has a waveform similar to a square wave. The effective value or average value of the welding voltage Vw correlates with the arc length. The feed speed Fw of Fig. 1 is subjected to variable speed control such that the voltage effective/average value detection signal Ved is equal to the voltage setting signal Vs of Fig. 1. In this way, the arc length is controlled.

Although the case where the welding current Iw is a sine wave is described, the welding current Iw may be a rectangular wave (including a trapezoidal wave).

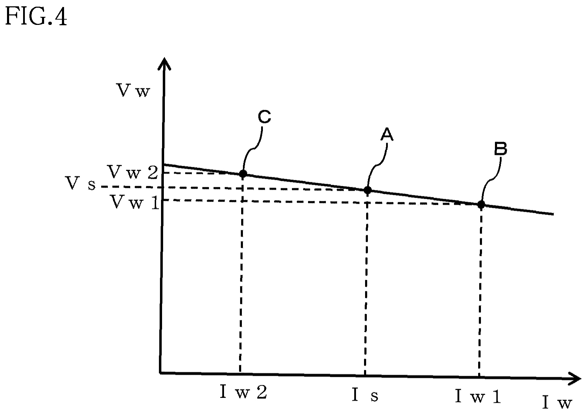

Fig. 4 shows the relationship between the external characteristics and the operating point of the welding current and welding voltage to describe the submerged arc welding control method according to an embodiment of the the present disclosure. In the figure, the horizontal axis shows the welding current Iw, and the vertical axis shows the welding voltage Vw. Description with reference to the figure is given below.

The figure shows the case where the output is DC. In the figure, the external characteristics are shown as a straight line passing through the intersection point A of the current setting signal Is and the voltage setting signal Vs and having a negative slope K. The operating point converges at the intersection point A where the welding current Iw = Is and the welding voltage Vw = Vs, whereby a proper arc length is achieved. When the arc length becomes shorter from this state due to disturbances such as irregular movement of the molten pool, fluctuation of the distance between the power supply tip and the base metal, temporary fluctuation of the feeding speed or the like, the welding current Iw changes to Iw1 that is greater than Is, while the welding voltage Vw changes to Vw1 that is smaller than Vs, resulting in the operating point shifting to the lower right point B on the line of the external characteristics. Since the welding current Iw1 at the operating point B is greater than the welding current Is at the intersection point A, the wire melting speed becomes faster, making the arc length longer. Also, since the welding voltage Vw1 at the operating point B is smaller than the voltage setting signal Vs, the feed speed is reduced by variable speed control, making the arc length longer. Due to the combination of the action by the external characteristics and the variable speed control described above, the operating point of the welding current Iw and the welding voltage Vw quickly returns from B to the intersection point A, and the arc length returns to the appropriate value.

When the arc length becomes longer from the state where the operating point is at the intersection point A due to disturbances, the welding current Iw changes to Iw2 that is smaller than Is, while the welding voltage Vw changes to Vw2 that is greater than Vs, resulting in the operating point shifting to the upper left point C on the line of the external characteristics. Since the welding current Iw2 at the operating point C is smaller than the welding current Is at the intersection point A, the wire melting speed slows down, making the arc length shorter. Also, since the welding voltage Vw2 at the operating point C is greater than the voltage setting signal Vs, the feed speed is increased by variable speed control, making the arc length shorter. Due to the combination of the effect of the external characteristics and the effect of the variable speed control described above, the operating point of the welding current Iw and the welding voltage Vw quickly returns from C to the intersection point A, and the arc length returns to the appropriate value.

In the conventional methods, the welding current Iw is subjected to constant current control, so that the wire melting speed is constant. Thus, when the arc length changes, the feed speed is subjected to variable speed control to restore the proper arc length. As mentioned before, if the gain for the variable speed control is large at this time, the change in the feed speed becomes excessively sensitive, resulting in an unstable welding state. Therefore, the gain cannot be set to a large value. In the conventional methods, therefore, the convergence value of the welding voltage Vw has an error from the value of the voltage setting signal Vs, resulting in a large steady-state deviation. That is, in the conventional arc length control, the steady-state deviation is large, and the transient response is slow.

In contrast, in the present embodiment, the effect of the external characteristics and the effect of the variable speed control are combined, which makes it possible to reduce the steady-state deviation of the arc length control and make the transient response faster without increasing the gain for the variable speed control. As a result, in the present embodiment, the convergence values of the welding current Iw and the welding voltage Vw are equal to the current setting signal Is and the voltage setting signal Vs, so that the welding conditions can be properly set and controlled.

When the output is AC, the horizontal axis may be the effective value or average value of the welding current Iw, while the vertical axis may be the effective value or average value of the welding voltage Vw.

Next, the effects of the present embodiment will be described. In the submerged arc welding control method of the present embodiment, a current set value and a voltage set value are set, the external characteristics are set to characteristics represented by a line passing through an intersection point of the current set value and the voltage set value and having a negative slope at the intersection point, variable speed control of feed speed is performed such that the welding voltage is equal to the voltage set value, and an operating point of the welding current and the welding voltage are made converge at the intersection point of the external characteristics. In the present embodiment, since the effect of the external characteristics and the effect of the variable speed control are combined, it is possible to reduce the steady-state deviation of the arc length control and make the transient response faster. As a result, in the present embodiment, the convergence values of the welding current and the welding voltage are equal to the current setting signal Is and the voltage setting signal Vs, so that the welding conditions can be properly set and controlled. The line representing the external characteristics only needs to have a negative slope at the above-described intersection point, and does not need to be a straight line as shown in Fig. 4, but may be a bent line, a curve or the like with different slopes for the sections of the welding current.

Preferably, in the present embodiment, the slope of the external characteristics is set to be equal to or less than -5V/100A and equal to or greater than -25V/100A. When the slope is greater than -5V/100A, change in welding current with change in arc length becomes excessively sensitive, which may cause an unstable welding state. When the slope is smaller than -25V/100A, change in welding current with change in arc length becomes smaller, and the action of restoring the proper arc length becomes less effective. By setting the slope in the above-described range, it is possible to enhance the effect of restoring the proper arc length while maintaining the stable welding state. It is more preferable to set the slope to be equal to or less than -10V/100A and equal to or greater than -20V/100A.

Preferably, in the present embodiment, when the output is AC, the welding current and the welding voltage are effective values or average values. In this way, the present embodiment is also applicable to the case where the output is AC.

Preferably, in the present embodiment, the gain for the variable speed control is set such that the absolute value of the error between the convergence value of the welding voltage and the voltage set value is equal to or greater than 0.1 V and equal to or less than 1 V. When the gain for the variable speed control is set such that the absolute value of the error is smaller than 0.1 V, the change in feed speed become excessively sensitive, which may cause an unstable welding state. When the gain for the variable speed control is set such that the absolute value of the error is greater than 1 V, the steady-state deviation from the voltage set value becomes greater, which adversely affects the setting and control of the welding conditions. By setting the gain for variable speed control in the above-described range, it is possible to prevent the steady-state deviation from adversely affecting the setting and control of the welding conditions while maintaining a stable welding state. It is more preferable to set the gain for the variable speed control such that the absolute value of the error is equal to or greater than 0.3 V and equal to or less than 0.8 V.

Preferably, in the present embodiment, the gain for the variable speed control is set such that the absolute value of the error between the convergence value of the effective value or average value of the welding voltage and the voltage set value is equal to or greater than 0.1 V and equal to or less than 1 V. When the output is AC, by setting the gain for variable speed control in the above-described range, it is possible to prevent the steady-state deviation from adversely affecting the setting and control of the welding conditions while maintaining a stable welding state.

Furthermore, according to an embodiment, in a submerged arc welding system for performing welding by feeding a welding wire and outputting a welding current and a welding voltage in accordance with set external characteristics, the submerged arc welding system sets a current set value and a voltage set value, sets the external characteristics to characteristics represented by a line passing through an intersection point of the current set value and the voltage set value and having a negative slope at the intersection point, performs variable speed control of feed speed such that the welding voltage is equal to the voltage set value, and makes an operating point of the welding current and the welding voltage converge at the intersection point of the external characteristics. The submerged arc welding system according to the present embodiment achieves the above-described effect.

REFERENCE NUMERALS

1: Welding wire 2: Base metal 3: Arc 4: Welding torch 5: Feeding roller 6: Flux feeder
AMC: Current amplitude modulation circuit Amc: Current amplitude modulation signal
AT: Automatic carriage CC: External characteristics control circuit
EI: Current error amplification circuit Ei: Current error amplification signal
EN: Electrode negative polarity EP: Electrode positive polarity
FC: Feed control circuit Fc: Feed control signal
FMC: Feed variable speed control circuit Fmc: Feed speed modulation signal
Fw: Feed speed GR: Gain setting circuit
Gr: Gain setting signal IAR: AC current setting circuit
Iar: AC current setting signal ICR: Current control setting circuit
Icr: Current control setting signal ID: Current detection circuit
Id: Current detection signal Idr: DC current setting signal
IED: Current effective/average value detection circuit
Ied: Current effective/average value detection signal
IS: Current setting circuit Is: Current setting signal
Iw: Welding current MR: Output mode setting circuit
Mr: Output mode setting signal PM: Power supply main circuit
SPN: Polarity switching setting circuit Spn: Polarity switching signal
t: Time Ten: Electrode negative polarity period
Tep: Electrode positive polarity period TNR: Electrode negative polarity period setting circuit
Tnr: Electrode negative polarity period setting signal
Tpn: Polarity signal
TPR: Electrode positive polarity period setting circuit
Tpr: Electrode positive polarity period setting signal
VD: Voltage detection circuit Vd: Voltage detection signal
VED: Voltage effective/average value detection circuit
Ved: Voltage effective/average value detection signal
VS: Voltage setting circuit Vs: Voltage setting signal
Vw: Welding voltage WM: Feeder

Claims

1. A submerged arc welding control method for performing welding by feeding a welding wire and outputting a welding current and a welding voltage in accordance with set external characteristics, the method comprising:

   setting a current set value and a voltage set value;
   setting the external characteristics so as to pass through an intersection point of the current set value and the voltage set value and have a negative slope at the intersection point;
   performing variable speed control of feed speed of the welding wire such that the welding voltage is equal to the voltage set value; and
   causing an operating point of the welding current and the welding voltage to converge at the intersection point of the external characteristics.

2. The submerged arc welding control method according to claim 1, wherein the slope is set to be equal to or less than -5V/100A and equal to or greater than -25V/100A.

3. The submerged arc welding control method according to claim 1 or 2, wherein when the output is AC, the welding current and the welding voltage are effective values or average values.

4. The submerged arc welding control method according to claim 1 or 2, wherein a gain for the variable speed control is set such that an absolute value of an error between the voltage set value and a convergence value of the welding voltage is equal to or greater than 0.1 V and equal to or less than 1V.

5. The submerged arc welding control method according to claim 3, wherein a gain for the variable speed control is set such that an absolute value of an error between the voltage set value and a convergence value of the effective value or the average value of the welding voltage is equal to or greater than 0.1 V and equal to or less than 1 V.

6. A submerged arc welding system for performing welding by feeding a welding wire and outputting a welding current and a welding voltage in accordance with set external characteristics,
   wherein the submerged arc welding system is configured to:

   set a current set value and a voltage set value;
   set the external characteristics so as to pass through an intersection point of the current set value and the voltage set value and have a negative slope at the intersection point;

perform variable speed control of feed speed of the welding wire such that the welding voltage is equal to the voltage set value; and

cause an operating point of the welding current and the welding voltage to converge at the intersection point of the external characteristics.

FIG.1

FIG.2

(A)
I w

I dr

Time

(B)
V w

Time

(C)
S pn

High

Time

FIG.3

FIG.4

EP 4 670 892 A1

Europäisches
Patentamt
European
Patent Office
Office européen
des brevets

## EUROPEAN SEARCH REPORT

**Application Number**

EP 25 18 0422

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2018 083234 A (KOBE STEEL LTD) 31 May 2018 (2018-05-31) | 1,4-6 | INV. B23K9/095 B23K9/12 |
| Y | * paragraph [0001]; claims 1,2; figures 1,2,5 * | 2,3 | B23K9/18 B23K9/073 |
| X | JP S58 55176 A (OSAKA DENKI CO LTD) 1 April 1983 (1983-04-01) | 1,4-6 | |
| Y | * paragraphs [0001], [0009], [0039] – [0041], [0066], [0067]; claim 1; figure 3 * | 2,3 | |
| Y | CN 101 264 544 A (DAIHEN CORP [JP]) 17 September 2008 (2008-09-17) * claim 1; figures 2,4 * | 2,3 | |
| Y | CN 110 505 934 A (DAIHEN CORP) 26 November 2019 (2019-11-26) * paragraph [0071] * | 2 | |

**TECHNICAL FIELDS SEARCHED (IPC)**

B23K

The present search report has been drawn up for all claims

| Place of search | Date of completion of the search | Examiner |
|---|---|---|
| Berlin | 5 November 2025 | Schloth, Patrick |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 18 0422

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2025

| Patent document cited in search report | Publication date | Patent family member(s) | | Publication date |
|---|---|---|---|---|
| JP 2018083234 A | 31-05-2018 | NONE | | |
| JP S5855176 A | 01-04-1983 | NONE | | |
| CN 101264544 A | 17-09-2008 | CN | 101264544 A | 17-09-2008 |
| | | JP | 5090759 B2 | 05-12-2012 |
| | | JP | 2008221269 A | 25-09-2008 |
| CN 110505934 A | 26-11-2019 | CN | 110505934 A | 26-11-2019 |
| | | EP | 3613530 A1 | 26-02-2020 |
| | | JP | 6763818 B2 | 30-09-2020 |
| | | JP | 2018176255 A | 15-11-2018 |
| | | US | 2020130095 A1 | 30-04-2020 |
| | | WO | 2018193896 A1 | 25-10-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H091997271944 A